# EUROPEAN PATENT SPECIFICATION

(11) **EP 2 612 770 B1**
(45) Date of publication and mention of the grant of the patent: **25.05.2016**
(21) Application number: 10856677.9
(22) Date of filing: 31.08.2010
(51) Int. Cl.: B60C 11/12, B60C 11/03

(54) **TREAD FOR WINTER-USE PNEUMATIC TIRES**
REIFENPROFIL FÜR WINTERREIFEN
BANDE DE ROULEMENT POUR PNEUMATIQUES D'HIVER

(43) Date of publication of application: 10.07.2013
(73) Proprietor: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventor: KANEKO Shuichi, Ota-shi Gunma 373-8668 (JP)
(74) Representative: Diernaz, Christian
(86) International application number: PCT/JP2010/064807
(87) International publication number: WO 2012/029125

(56) References cited:
- JP-A- 2 310 109
- JP-A- 9 094 828
- JP-A- 2001 071 712
- JP-A- 2005 193 770
- JP-A- 2006 007 796
- JP-A- 2006 168 498
- JP-A- 2007 022 277
- JP-A- 2007 210 534
- JP-A- 2008 062 749

## Description

### Technical field

The present invention relates to a tread for a winter-use pneumatic tyre, and in particular relates to a tread for a winter-use pneumatic tyre which has a plurality of blocks demarcated by circumferential grooves and transverse grooves.

Such a tread corresponding with the preamble of claim 1 is known from JP 2006-168498A.

### Background art

The treads of winter-use pneumatic tyres predominantly employ block patterns, and performance on snow is enhanced by snow becoming caught in spaces between two blocks that are adjacent in the direction of rotation of the tyre. Also, performance on ice is enhanced by means of a so-called edge effect and by an effect of removing a water film on the ice surface by providing these blocks with a plurality of so-called sipes which extend in the width direction of the tyre.

As means for further enhancing the performance on ice there are known techniques whereby the density of the sipes provided in the blocks is increased, and the edge effect and the effect of removing the water film on the ice surface are enhanced. However, if the density of the sipes provided in the blocks is increased then the block rigidity decreases, and as a result the amount of deformation of the block increases and the durability of the tread pattern decreases.

Patent literature article 1 discloses a technique aimed at achieving both performance on ice and durability of the tread pattern by providing the blocks with a plurality of sipes and forming small holes which open in a ground contacting surface.

Further, Figure 2 of Patent literature article 2 discloses a technique aimed at enhancing performance on icy and snowy road surfaces, in which blocks located in a central region of the tread are provided with sipes which extend in the width direction of the tyre, and elliptically shaped pinholes (small holes) are disposed in end portions of said blocks.

Further, Figure 1 of Patent literature article 3 discloses a technique aimed at enhancing performance on icy and snowy road surfaces by dividing blocks into three regions by providing the blocks with two relatively thick sipes (dividing auxiliary grooves) which extend in the width direction of the tyre and substantially parallel to other sipes, and providing the central region with sipes and disposing small holes in the other regions.

### Prior art literature

### Patent literature

Patent literature article 1: Japanese Patent Kokai 2005-297695
Patent literature article 2: Japanese Patent Kokai 2007-182133
Patent literature article 3: Japanese Patent Kokai 2006-168498

### Summary of the invention

### Problems to be resolved by the invention

However, with the technique disclosed in Patent literature article 1 there is the problem that durability of the tread pattern cannot be adequately maintained, predominantly as a result of the disposition of the sipes and the disposition of the small holes.

Further, there is a problem with the elliptical small holes disclosed in Patent literature article 2 in that there is concern that the durability of the tread pattern may be deteriorated by concentration of stress at the elliptical end portions when the tyre is rotating.

Further, with the technique disclosed in Patent literature article 3 there is the problem that provision of relatively thick sipes causes the area of the ground contacting surface of the blocks to be reduced, the performance on ice to be deteriorated.

To this end, the present invention is intended to resolve the problems faced by the prior art described above, and its aim is to provide a winter-use pneumatic tyre with which the performance on ice can be enhanced and tread pattern durability can be enhanced. Means of overcoming the problems

In order to achieve the abovementioned objective, the present invention is a tread for a winter-use pneumatic tyre having at least one circumferential groove extending in the circumferential direction of the tyre, a plurality of transverse grooves extending in the transverse direction of the tyre, and a plurality of blocks demarcated by the circumferential grooves and the transverse grooves, characterised in that it has blocks which are aligned in the circumferential direction and in which are formed respectively circumferential direction edges formed by the transverse grooves, at least one thin incision which extends substantially parallel to the circumferential direction edges and has a depth equal to or less than the depth of the circumferential groove, and which has a widened portion at its bottom, and at least one series of small holes comprising at least two small holes which open in the ground contacting surface of the block, extend in the inward radial direction of the tyre and have a depth equal to or less than the depth of the circumferential groove, and in that the at least one series of small holes is formed in a specific region neighbouring the circumferential direction edge, and is formed in an intermediate portion between the circumferential direction edge and the at least one thin incision.

Here, 'circumferential direction edge' refers to a block end portion (edge) substantially parallel to a transverse groove which demarcates a block, from among the block end portions (edges) in the surface of contact between the block and the road surface. Also, 'thin incision' refers to an incision formed by a knife blade or the like, also known as a so-called sipe, and the width of the thin incision at the tread outer surface is relatively small compared predominantly with the lateral grooves. Also, 'small hole' is one type of incision, and refers to a circular cross-sectional hole in the tread extending in the inward radial direction of the tyre. Also, 'a series of small holes' refers to a plurality of holes arranged consecutively. Also, 'widened portion' refers to a section which has a width that is larger than the width of the thin incision, and which is formed integrally with and in communication with an elongated incision.

In the present invention configured as described above, a series of small holes is formed in a specific neighbouring region of the circumferential direction edge in which the degree to which the block rigidity is decreased can be suppressed in comparison with a case in which an elongated incision is formed, and therefore the decrease in the block rigidity can be suppressed in comparison with a case in which an elongated incision is formed, and as a result the durability of the tread pattern can be enhanced.

Further, in the present invention, in addition to the series of small holes being formed in a specific neighbouring region of the circumferential direction edge, this series of small holes is formed in such a way that it is disposed in an intermediate portion between the circumferential direction edge and a thin incision, and therefore the efficiency with which a water film on the surface of the ice can be sucked up by the series of small holes can be enhanced by means of the widened portion of the elongated incision. In other words, the block rigidity decreases locally at the perimeter of the widened portion, and therefore by means of such a disposition the series of small holes is more readily influenced by the relative decrease in the block rigidity due to the widened portion, and thus the edge effect of each small hole is increased by virtue of an increase in the edge pressure of the small holes which acts on the edge portion, the water film on the surface of the ice can be more effectively sucked up into the interior of the small holes, and therefore the performance on ice is enhanced.

Further, concentration of stress at the bottom of the thin incision is suppressed by means of the widened portion of the thin incision having a widened portion at its bottom, and also the surface area of the block that comes into contact with air is increased by means of the widened portion, and thus the heat dissipation characteristics of the block can be improved and degradation of the material used for the block due to heat can be suppressed. As a result, tread pattern durability can be more reliably enhanced.

As a result, according to the present invention it is possible to enhance the performance on ice by disposing as described above elongated incisions which achieve a first performance on ice, and a series of small holes which is disposed in such a way that the efficiency with which the water film is sucked up is enhanced by the widened portion and which achieves a second performance on ice, while at the same time enhancing tread pattern durability while maintaining a high rigidity of the block as a whole by suppressing the degree of decrease in block rigidity by forming the series of small holes in a specific neighbouring region of the circumferential direction edge, and by suppressing the concentration of stress at the bottom of the elongated incision by means of the widened portion, and by suppressing degradation of the block material by means of heat dissipation in the widened portion.

In the present invention, the tread for a winter-use pneumatic tyre preferably has a prescribed direction of rotation, and the specific neighbouring region of the circumferential direction edge is the region neighbouring the trailing side circumferential direction edge.

Here, 'trailing side circumferential direction edge' refers to the circumferential direction edge located to the rear in the direction of rotation of the tyre, from among the circumferential direction edges.

In the present invention configured in this way, the tread pattern durability can be more effectively enhanced by forming a series of small holes, having a higher resistance to mechanical stress than a case in which a thin incision is formed, in a neighbouring region of the trailing side circumferential direction edge, which is the circumferential direction edge having the highest concentration of stress when the tyre is rotating.

In the present invention the separation between the circumferential direction edge and the at least one thin incision, between which at least one series of small holes is formed, is preferably between 8.0mm and 14.0mm. In the present invention configured in this way it is possible to achieve enhanced tread pattern durability and to suppress decreases in the performance on ice. In other words, if the separation between the circumferential direction edge and the thin incision having a widened portion at its bottom is smaller than 8.0mm then the effect whereby the series of small holes formed in the intermediate portion suppresses the decrease in block rigidity becomes less marked, and tread pattern durability decreases. On the other hand, if the separation between the circumferential direction edge and the thin incision having a widened portion at its bottom is larger than 14.0mm then the effect whereby the efficiency with which the water film on the surface of the ice is sucked up by the series of small holes is enhanced by means of a localised decrease in the block rigidity at the perimeter of the widened portion becomes less marked by combining the thin incision having a widened portion and the series of small holes, and the performance on ice decreases. It is therefore possible to achieve enhanced tread pattern durability and to suppress the decrease in the performance on ice if the separation between the circumferential direction edge and the at least one thin incision is set to between 8.0mm and 14.0mm.

In the present invention the diameter of the small holes constituting the at least one series of small holes is preferably between 1.0mm and 3.0mm. In the present invention configured in this way it is possible to achieve enhanced tread pattern durability and to suppress decreases in the performance on ice. In other words, if the diameter of the small holes constituting the at least one series of small holes is less than 1.0mm then the effect whereby a water film on the surface of the ice is sucked up into the interior of these small holes is inadequate, even when combined with the effect whereby the efficiency with which the water film on the surface of the ice is sucked up by the small holes is enhanced concomitantly with a localised decrease in the block rigidity due to the widened portion, and thus the performance on ice decreases. On the other hand, if the diameter of the small holes constituting the at least one series of small holes is greater than 3.0mm then the effect whereby the decrease in block rigidity is suppressed by means of the formation of the series of small holes in a specific neighbouring region of the circumferential direction edge becomes less marked, and not only does the tread pattern durability decrease, but also the performance on ice decreases because the surface area of the block surface which is in contact with the road surface is reduced as a result of the increase in the surface area of the small holes on the surface of the block. It is therefore possible to achieve enhanced tread pattern durability and to suppress the decrease in the performance on ice if the diameter of the small holes is set to between 1.0mm and 3.0mm.

In the present invention the separation of the small holes constituting the at least one series of small holes is preferably between 3.0mm and 6.0mm. In the present invention configured in this way it is possible to achieve enhanced tread pattern durability and to suppress decreases in the performance on ice. In other words, if the separation of adjacent small holes constituting the at least one series of small holes is less than 3.0mm then the effect whereby the decrease in block rigidity is suppressed by means of the formation of the series of small holes in a specific neighbouring region of the circumferential direction edge becomes less marked, and the tread pattern durability decreases. On the other hand, if the separation of adjacent small holes constituting the at least one series of small holes is greater than 6.0mm then the effect whereby a water film on the surface of the ice is sucked up into the interior of these small holes is inadequate, even when combined with the effect whereby the efficiency with which the water film on the surface of the ice is sucked up by the small holes is enhanced concomitantly with a localised decrease in the block rigidity due to the widened portion, and thus the performance on ice decreases. It is therefore possible to achieve enhanced tread pattern durability and to suppress the decrease in the performance on ice if the separation of adjacent small holes constituting the at least one series of small holes is set to between 3.0mm and 6.0mm.

In the present invention the widened portion of the at least one elongated incision preferably has a circular cross-sectional shape. In the present invention configured in this way the widened portion has a circular cross-sectional shape which typically exhibits a good balance of heat dissipation, resulting from an increase in the surface area which is in contact with the air, and stress dispersion (suppression of stress concentration), and therefore tread pattern durability can be enhanced and it is also possible to alleviate processing complications when the thin incision having a widened portion at its bottom is manufactured.

In the present invention the diameter of the circular cross section of the widened portion is preferably between 1.0mm and 3.0mm. In the present invention configured in this way it is possible to achieve enhanced tread pattern durability and to suppress decreases in the performance on ice. In other words, if the diameter of the circular cross section of the widened portion of the at least one elongated incision is less than 1.0mm then the degree by which the block rigidity at the widened portion decreases locally is reduced, and even if at least one series of small holes is disposed in the intermediate portion between the circumferential direction edge and the thin incision having a widened portion, the effect whereby the efficiency with which the water film on the surface of the ice is sucked up by the series of small holes is enhanced decreases. On the other hand, if the diameter of the circular cross section of the widened portion of the at least one elongated incision is greater than 3.0mm then the degree of localised decrease in the block rigidity at the widened portion is increased, rigidity of the whole block is liable to decrease, and the tread pattern durability decreases. It is therefore possible to achieve enhanced tread pattern durability and to suppress the decrease in the performance on ice if the diameter of the circular cross section of the widened portion of the at least one elongated incision is set to between 1.0mm and 3.0mm.

In the present invention the blocks aligned in the circumferential direction are preferably formed on the tread shoulder portion.

Here, 'tread shoulder portion' refers to the region of the tread portion located on the outermost side in the width direction of the tyre.

In the present invention configured in this way, the tread pattern durability can be effectively enhanced because the blocks aligned in the circumferential direction are formed in the tread shoulder portion which serves a more important function than other regions of the tread when the tyre is rolling, and which generates more heat than other portions of the tread.

In the present invention the at least one elongated incision is preferably formed in such a way that it opens in the block wall located on the outside of the tread.

Here, 'outside of the tread' refers to the direction facing to the outside in the width direction of the tyre. Further, 'block wall' refers to the section which faces the groove at the side surface of the block. When a block is located in the tread shoulder portion, the block side surface located on the outside of the tread is also called a block wall.

In the present invention configured in this way, degradation due to heat in the material used for the blocks can be more effectively suppressed, thereby enhancing the tread pattern durability, because heat within the block is dissipated through the open portion which is open in the block wall and a high heat dissipation characteristic can thus be obtained.

### Brief explanation of the figures

[Figure 1] is a diagram illustrating schematically a tread for a winter-use pneumatic tyre according to a first mode of embodiment of the present invention.
[Figure 2] is a diagram illustrating schematically a block in the tread for a winter-use pneumatic tyre according to the first mode of embodiment of the present invention.
[Figure 3] is an enlarged sectional view of the tread for a winter-use tyre as viewed along line III-III in Figure 2.
[Figure 4] is a diagram illustrating schematically a block in the tread for a winter-use pneumatic tyre according to a second mode of embodiment of the present invention.
[Figure 5] is a diagram illustrating schematically a tread for a winter-use pneumatic tyre according to a third mode of embodiment of the present invention.

### Modes of embodying the invention

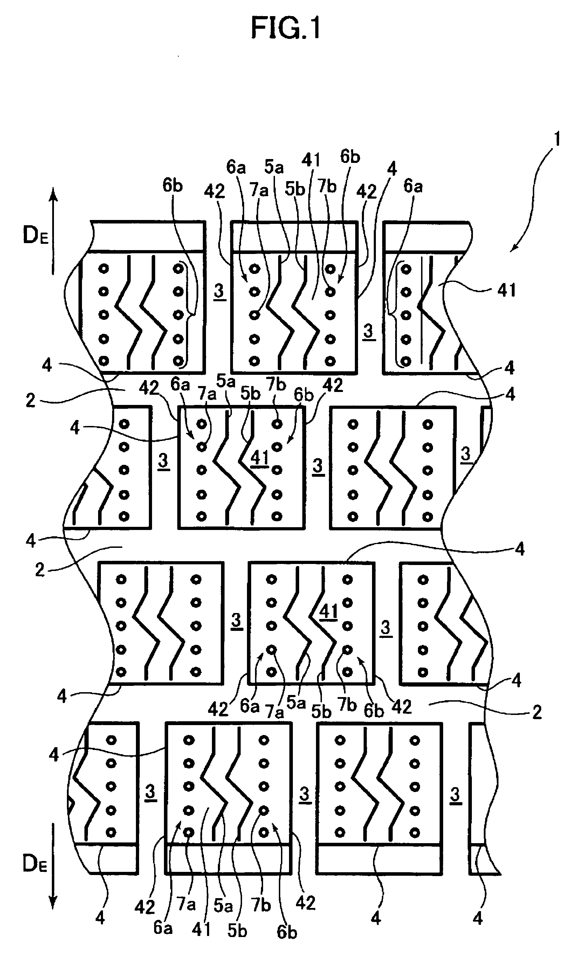

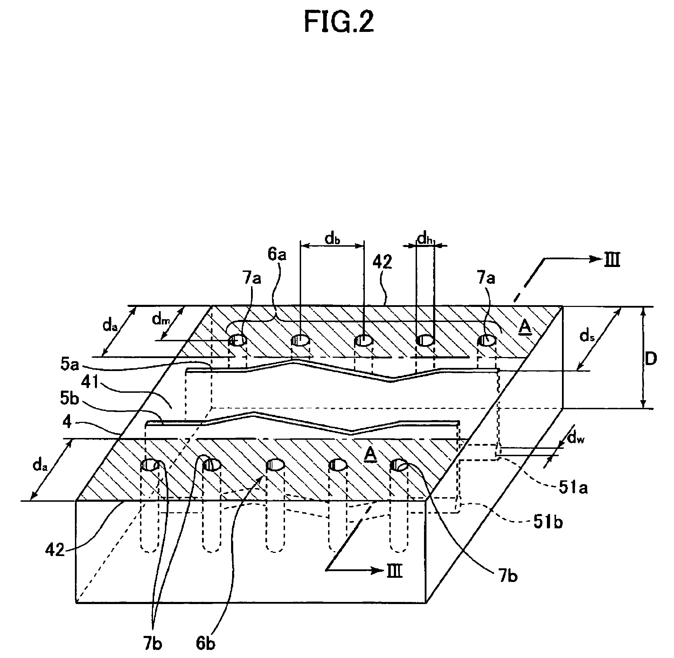

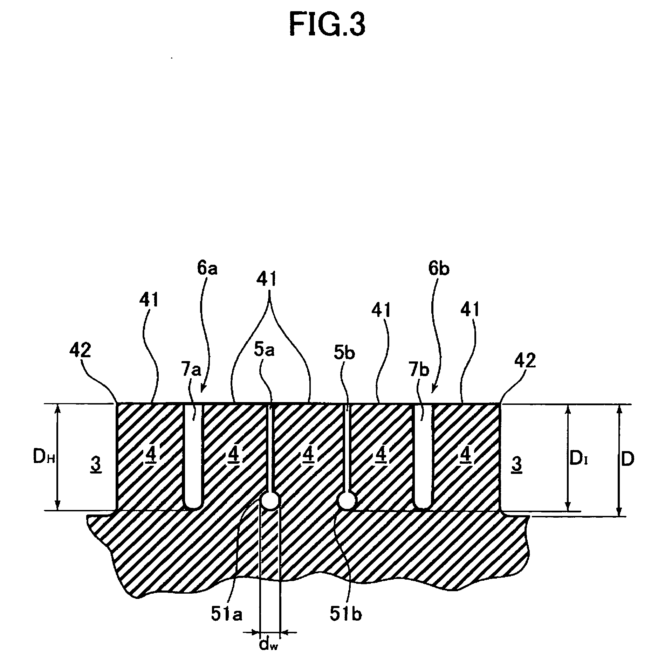

Preferred modes of embodiment of the present invention will now be described with reference to the diagrams. First, a tread for a winter-use pneumatic tyre according to a first mode of embodiment of the present invention will be described based on Figure 1 to Figure 3. Figure 1 is a diagram illustrating schematically a tread for a winter-use pneumatic tyre according to a first mode of embodiment of the present invention, Figure 2 is a diagram illustrating schematically a block in the tread for a winter-use pneumatic tyre according to the first mode of embodiment of the present invention, and Figure 3 is an enlarged sectional view of the tread for a winter-use tyre as viewed along line III-III in Figure 2.

First, as shown in Figure 1, reference number 1 indicates a winter-use pneumatic tyre tread according to a first mode of embodiment. It should be noted that the size of the tyre in this example is 205/55R16. In the tread 1 are formed three circumferential grooves 2 extending in the circumferential direction of the tyre and a plurality of transverse grooves 3 extending in the transverse direction (width direction) of the tyre. Reference number 4 indicates a block in the winter-use tyre tread 1 according to the first mode of embodiment, and the blocks 4 are formed by being demarcated by the circumferential grooves 2 and the transverse grooves 3, and further, circumferential direction edges 42 are formed by means of the transverse grooves 3. It should be noted that in the winter-use tyre tread 1 in the present mode of embodiment, the direction of rotation of the tyre is not prescribed.

Next, as shown in Figure 2 and Figure 3, the blocks 4 are formed in such a way that they have the same block height as the depth D of the circumferential grooves 2, and further they have a surface 41 which comes into contact with the road surface when the tyre is rolling. The transverse grooves 3 have the same depth D as the circumferential grooves 2. In the present mode of embodiment, the depth D of the circumferential grooves 2 is 9.2mm. Further, as shown in Figure 3, circumferential direction edges 42 face the transverse grooves 3.

Next, as shown in Figures 1 to 3, series of small holes 6 comprising a plurality of small holes 7, and thin incisions 5 are formed in each block 4. In the present mode of embodiment, a set comprising a thin incision 5a and a series of small holes 6a comprising small holes 7a, and a set comprising a thin incision 5b and a series of small holes 6b comprising small holes 7b are provided on each of the circumferential direction edge 42 sides of the block 4. The configuration and action of these two sets are the same as each other, so predominantly only one set will be described hereinbelow.

The configuration and action of the series of small holes 6 will first be described. As shown in Figure 2 and Figure 3, a series of small holes 6a (6b) has five small holes 7a (7b) which open in a surface 41 which comes into contact with the road surface, and which extend in the inward radial direction of the tyre, and which each have a depth DH which is less than or equal to the depth D of the circumferential grooves 2, and these small holes 7a (7b) are configured in a consecutive arrangement. In the present mode of embodiment, the series of small holes 6a (6b) is configured in such a way that the small holes 7a are aligned in a straight line. It should be noted that in the present mode of embodiment the series of small holes 6a (6b) consist of five small holes 7a (7b), but they may consist of at least two or more small holes, without limitation to the example illustrated. The maximum depth DH of the small holes 7 is the same D as the circumferential grooves 2. In the present mode of embodiment, the depth DH of the small holes 7 is 7.5mm.

The two series of small holes 6a, 6b are each formed in neighbouring regions A of circumferential direction edges 42, which are end portions substantially parallel to the transverse grooves 3 which demarcate the block 4. These neighbouring regions A are regions in which it is possible to suppress the degree of decrease in block rigidity more by forming a series of small holes than by forming an elongated incision, and as shown in Figure 2, they are regions which extend in the circumferential direction of the tyre for a distance da from the circumferential direction edges 42. In the blocks 4 in the present mode of embodiment, the distance da is 8mm. In the present mode of embodiment, the tread pattern durability is enhanced by forming series of small holes 6a, 6b in these neighbouring regions A to suppress the decrease in block rigidity.

Next, as shown in Figure 1 and Figure 2, the series of small holes 6a (6b) are formed in such a way that the small holes 7a (7b) are aligned substantially parallel to the circumferential direction edge 42 in the neighbouring region A of the circumferential direction edge 42. In the present mode of embodiment, the separation dm between the circumferential direction edge 42 and the series of small holes 6a (6b) is 5.0mm. Further, in the present mode of embodiment the diameter dh (see Figure 2) of each small hole 7 constituting the series of small holes 6 is 1.5mm, and the separation db between adjacent small holes 7 (see Figure 2) is 5.0mm.

The configuration and action of the thin incisions 5 will next be described. First, as shown in Figure 1 to Figure 3, thin incisions 5a (5b) which extend in the inward radial direction of the tyre and which open in the surface 41 which comes into contact with the road surface are formed in the block 4, in the central region of the block. As shown in Figure 1 and Figure 2, the thin incisions 5a (5b) are formed in such a way that as a whole they extend in the transverse direction of the tyre, and such that they extend substantially parallel to the circumferential direction edge 42.

Next, as shown in Figure 2 and Figure 3, a widened portion 51a (51b) having a circular cross-section is formed at the bottom of the thin incision 5a (5b), extending in the transverse direction of the tyre and extending substantially parallel to the circumferential direction edge 42. The widened portion 51a (51b) is a space formed integrally with the thin incision 5a (5b) in such a way that it communicates with the bottom of the thin incision 5a (5b) and enlarges the width of the bottom of the thin incision 5. The maximum depth DI of the thin incision 5a (5b) including the widened portion 51a (51b) (see Figure 3) is the same as the depth D of the circumferential groove 2. In the present mode of embodiment, the depth DI of the thin incision 5a (5b) including the widened portion 51a (51b) is 7.5mm, and the diameter dw of the widened portion 51a (51b) having a circular cross-section (see Figure 3) is 1.5mm.

The thin incisions 5a (5b) which open in the surface 41 of the block 4 which comes into contact with the road surface enhance the performance on ice, not only by exhibiting a so-called edge effect as an edge additional to the circumferential direction edge 42, but also by exhibiting an effect of stimulating direct contact between the block 4 and the ice by taking into the incised portion of the thin incision 5 a film of water which exists between the block 4 and the ice.

Further, the widened portion 51 formed at the bottom of the thin incision 5 suppresses the concentration of stress at the bottom of the thin incision 5, and also enhances the heat dissipation effect of the block 4 by increasing the area of the surface inside the block 4 which comes into contact with air by an amount corresponding to the widened portion 51, and enhances the tread pattern durability by suppressing degradation, due to heat, of the material used for the blocks 4. In the present mode of embodiment, the separation ds between the circumferential direction edge 42 and the thin incision 5a (5b) is 10.0mm.

The disposition and action of the circumferential direction edges 42, the series of small holes 6a (6b) and the thin incisions 5 will now be described. Here, typically forming a series of small holes suppresses the decrease in block rigidity more than forming a thin incision, and it is thus possible to ensure a high overall block rigidity, but on the other hand it is difficult to increase the edge pressure of the series of small holes, acting on the edge portion, to compensate for the amount by which the decrease in block rigidity is suppressed in a case in which a series of small holes is formed compared with a case in which an elongated incision is formed, and thus an enhancement of performance on ice cannot be obtained using small holes.

For this reason, in the present mode of embodiment, firstly by forming a widened portion 51a (51b) at the bottom of the thin incision 5a (5b), the rigidity at the periphery of the widened portion 51a (51b) is caused to decrease locally, and the edge pressure of the small holes which acts on the edge portion is increased by disposing the series of small holes 6a (6b) in the region in which the block rigidity has decreased locally. Specifically, in the present mode of embodiment, the series of small holes 6a (6b) is formed/disposed in a neighbouring region of the circumferential direction edge 42, as described hereinabove, and as shown in Figure 1 to Figure 3 the series of small holes 6a (6b) is formed/disposed in an intermediate portion between the circumferential direction edge 42 and the thin incision 5a (5b).

In the present mode of embodiment, by means of this disposition the rigidity at the periphery of the series of small holes 6a (6b) is caused to decrease locally, the edge pressure of the series of small holes which acts on the edge portion is increased, and on ice the series of small holes 6 exhibits a so-called edge effect as an edge additional to the circumferential direction edge 42 and the thin incision 5a (5b), and a water film which exists between the block and the ice is taken into the interior of the small holes 6 which thereby exhibit an effect whereby direct contact between the block and the water is stimulated, and thus the performance on ice is enhanced.

In the present mode of embodiment, the separation between the series of small holes 6a (6b) and the circumferential direction edge 42 is 5.0mm, which is half of the separation ds (=10mm) between the circumferential direction edge 42 and the thin incision 5a (5b) which has a widened portion 51a (51b) at its bottom. In other words, in the present mode of embodiment the series of small holes 6a (6b) is disposed in an intermediate location between the circumferential direction edge 42 and the thin incision 5a (5b) which has a widened portion 51a (51b) at its bottom. It should be noted that if the separation ds between the circumferential direction edge 42 and the thin incision 5a (5b) is 10mm, then the effect whereby the edge pressure of the series of small holes 6a (6b) is increased by means of the widened portion 51a (51b) described above can be effectively obtained provided that the series of small holes 6a (6b) is formed in the intermediate portion between the circumferential direction edge 42 and the thin incision 5a (5b) in such a way that the separation dm between the series of small holes 6a (6b) and the circumferential direction edge 42 is in the range of 4.0mm to 6.0mm. It should be noted that if, as described hereinbelow, the separation ds between the circumferential direction edge 42 and the thin incision 5a (5b) is not set to 10.0mm as in the present mode of embodiment, then the location and range of the intermediate portion in which the series of small holes is formed will also be modified proportionally according to the separation.

Here, in the example described above, the separation ds between the circumferential direction edge 42 and the thin incision 5a (5b) was 10.0mm, but this separation ds between the circumferential direction edge 42 and the thin incision 5a (5b) may have a value of between 8.0mm and 14.0mm. This is because if the separation between the circumferential direction edge 42 and the thin incision 5a, 5b having a widened portion 51a, 51b at its bottom is smaller than 8.0mm then the effect whereby the series of small holes 6a, 6b formed in the intermediate portion suppresses the decrease in block rigidity becomes less marked, and tread pattern durability decreases. On the other hand, this is because if the separation ds between the circumferential direction edge 42 and the thin incision 5a, 5b having a widened portion 51a, 51b at its bottom is larger than 14.0mm then the effect whereby the efficiency with which a water film on the surface of the ice is sucked up by the series of small holes (6a, 6b) is enhanced by means of a localised decrease in the block rigidity at the perimeter of the widened portion (51a, 51b) becomes less marked by combining the thin incision (5a, 5b) having a widened portion (51a, 51b) and the series of small holes (6a, 6b), and the performance on ice decreases.

Further, in the example described hereinabove, the small holes 7a, 7b are formed with a diameter dh of 1.5mm, but the diameters dh of the small holes 7a, 7b may be in the range of 1.0mm to 3.0mm. This is because if the diameter of the small holes (7a, 7b) constituting the series of small holes (6a, 6b) is less than 1.0mm then the effect whereby a water film on the surface of the ice is sucked up into the interior of these small holes is inadequate, even when combined with the effect whereby the efficiency with which the water film on the surface of the ice is sucked up by the small holes (7a, 7b) is enhanced concomitantly with a localised decrease in the block rigidity due to the widened portion (51a, 51b) of the elongated incision (5), and thus the performance on ice decreases. On the other hand, this is because if the diameter of the small holes (7a, 7b) constituting the series of small holes (6a, 6b) is greater than 3.0mm then the effect whereby the decrease in block rigidity is suppressed by means of the formation of the series of small holes (6a, 6b) in a neighbouring region of the circumferential direction edge 42 becomes less marked, and not only does the tread pattern durability decrease, but also the performance on ice decreases because the surface area of the block surface which is in contact with the road surface is reduced as a result of the increase in the surface area of the small holes (7a, 7b) on the surface of the block.

Further, in the example described hereinabove, the separation db between adjacent holes 7a (7b) is 5.0mm, but the separation db between adjacent holes 7a (7b) may be in the range of 3.0mm to 6.0mm. This is because if the separation db of adjacent small holes 7a (7b) constituting the series of small holes (6a, 6b) is less than 3.0mm then the effect whereby the decrease in block rigidity is suppressed by means of the formation of the series of small holes 6a (6b) in a neighbouring region A of the circumferential direction edge 42 becomes less marked, and the tread pattern durability decreases. On the other hand, this is because if the separation db of adjacent small holes 7a (7b) constituting the series of small holes 6a (6b) is greater than 6.0mm then the effect whereby a water film on the surface of the ice is sucked up into the interior of these small holes is inadequate, even when combined with the effect whereby the efficiency with which the water film on the surface of the ice is sucked up by the small holes (7a, 7b) is enhanced concomitantly with a localised decrease in the block rigidity due to the widened portion (51a, 51b), and thus the performance on ice decreases.

Further, in the example described hereinabove, the diameter dw of the widened portion 51a (51b) having a circular cross-section is 1.5mm, but the diameter dw of the widened portion 51a (51b) having a circular cross-section may have a value of between 1.0mm and 3.0mm. This is because if the diameter dw of the circular cross section of the widened portion 51a (51b) of the elongated incision 5a (5b) is less than 1.0mm then the degree by which the block rigidity at the widened portion 51a (51b) decreases locally is reduced, and even if a series of small holes 6a (6b) is formed in the neighbouring region A of the circumferential direction edge 42 and is disposed in the intermediate portion between the circumferential direction edge 42 and the thin incision 5a (5b) having a widened portion 51a (51b), the effect whereby the efficiency with which a water film on the surface of the ice is sucked up by the series of small holes 6a (6b) is enhanced decreases because the localised decrease in block rigidity at the perimeter of the widened portion 51a (51b) does not reach or is liable not to reach the series of small holes 6a (6b). On the other hand, this is because if the diameter dw of the circular cross section of the widened portion 51a (51b) of the elongated incision 5a (5b) is greater than 3.0mm then the degree of localised decrease in the block rigidity at the perimeter of the widened portion 51a (51b) is increased, rigidity of the whole block is liable to decrease, and the tread pattern durability decreases. It should be noted that the cross-sectional shape of the widened portion 51a (51b) described above is not limited to a circular shape, and the increase in width relative to the thin incision 5a (5b) may be modified within a range that allows the action described above to be obtained.

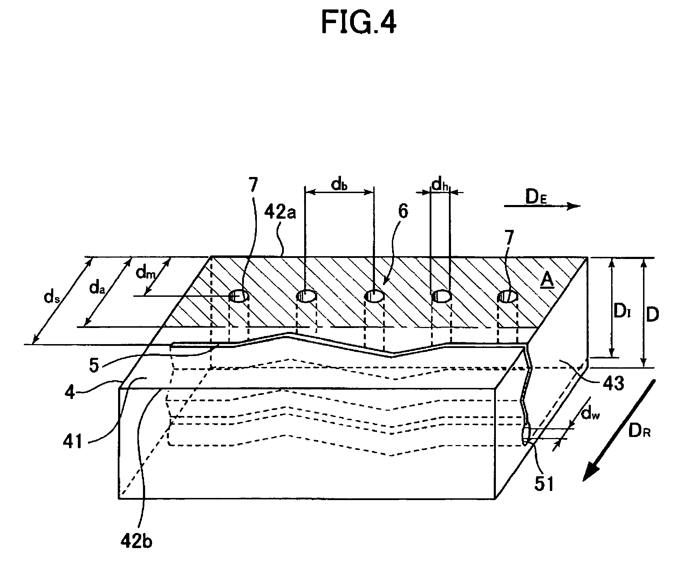

Next, a tread for a winter-use pneumatic tyre according to a second mode of embodiment of the present invention will be described based on Figure 4. Figure 4 is a diagram illustrating schematically a block in the tread for a winter-use pneumatic tyre according to a second mode of embodiment of the present invention. The basic configuration of the tyre tread according to this second mode of embodiment is the same as in the first mode of embodiment described hereinabove, and so hereinbelow the points of difference will mainly be described.

With the tread 1 in the second mode of embodiment, the direction of rotation of the tyre is prescribed as shown by the arrow DR in Figure 4 which indicates the direction of rotation. As shown in Figure 4, in the second mode of embodiment also, block 4 is formed in such a way that it has the same block height as the depth D of the transverse grooves 3, and it has a surface 41 which comes into contact with the road surface when the tyre is rolling.

A series of small holes 6, the same as that described hereinabove in the first mode of embodiment, is formed in the block 4. In this second mode of embodiment, one series of small holes 6 comprising five small holes 7 which extend in the inward direction of the tyre and which open in the surface 41 which comes into contact with the road surface is formed in the block 4.

Then, in the second mode of embodiment, as shown in Figure 4 the series of small holes 6 is formed in a neighbouring region A of the trailing side circumferential direction edge 42a, which, of the neighbouring regions of the circumferential direction edges 42a, 42b, has the highest concentration of stress when the tyre is rotating. As in the first mode of embodiment, the neighbouring region A of the trailing side circumferential direction edge 42a is a region in which it is possible to suppress the degree of decrease in block rigidity more by forming a series of small holes 6 than by forming an elongated incision, and as shown in Figure 4, it is a region which extends in the direction of rotation of the tyre DR for a distance da from the trailing side circumferential direction edge 42a. The distance da in the second mode of embodiment is 8mm.

Also, a thin incision 5, the same as that described hereinabove in the first mode of embodiment, is formed in the block 4. In this second mode of embodiment, one thin incision 5 which extends in the inward direction of the tyre and which opens in the surface 41 which comes into contact with the road surface is formed in the block 4. Also, a widened portion 51 having a circular cross-sectional shape is formed at the bottom of the thin incision 5, in the same way as in the first mode of embodiment.

The diameter dw of the widened portion 51 in the second mode of embodiment is 2mm. Thus in the second mode of embodiment, the diameter dw of the widened portion 51 is larger than the diameter dw (=1.5mm) of the widened portion 51 in the first mode of embodiment, and the degree of decrease in block rigidity at the perimeter of the widened portion 51 is correspondingly larger, and thus as described hereinabove by more effectively increasing the edge pressure of the series of small holes 6 which acts on the edge portion, the effect whereby water is absorbed is enhanced. Also, the surface area of the widened portion 51 is increased correspondingly as the diameter dw of the widened portion 51 is increased, and as a result the area of the surface inside the block 4 which comes into contact with air is further increased, thereby further enhancing the heat dissipating effect in the block 4 and enhancing the tread pattern durability.

In this second mode of embodiment, the thin incision 5 and its widened portion 51 open not only in the surface 41 of the block 4, but also in the block wall 43 located on the outer side of the tread as indicated by the arrow DE in Figure 4. By means of such an opening, generation of heat when the tyre is rolling is more effectively suppressed, and tread pattern durability is enhanced. It should be noted that in the present mode of embodiment the thin incision 5 at the bottom of which is formed a widened portion 51 is formed with a wave-like amplitude in both the width direction and the depth direction (including shapes such as zigzag shapes and dimensions in the width direction), including the widened portion 51, but it may be modified appropriately into another form such as a linear shape, or a form having a width that varies internally, for example.

In the second mode of embodiment, in the same way as in the first mode of embodiment described hereinabove, the series of small holes 6 is also formed in an intermediate portion between the circumferential direction edge 42a and the thin incision 5 which has a widened portion 51 at its bottom, and the dimensions of the series of small holes 6, and the dimensional relationships between the series of small holes 6, the elongated incision 5 and the circumferential direction edge 42 are the same as in the first mode of embodiment, and the same actions can be obtained thereby as described hereinabove in the first mode of embodiment.

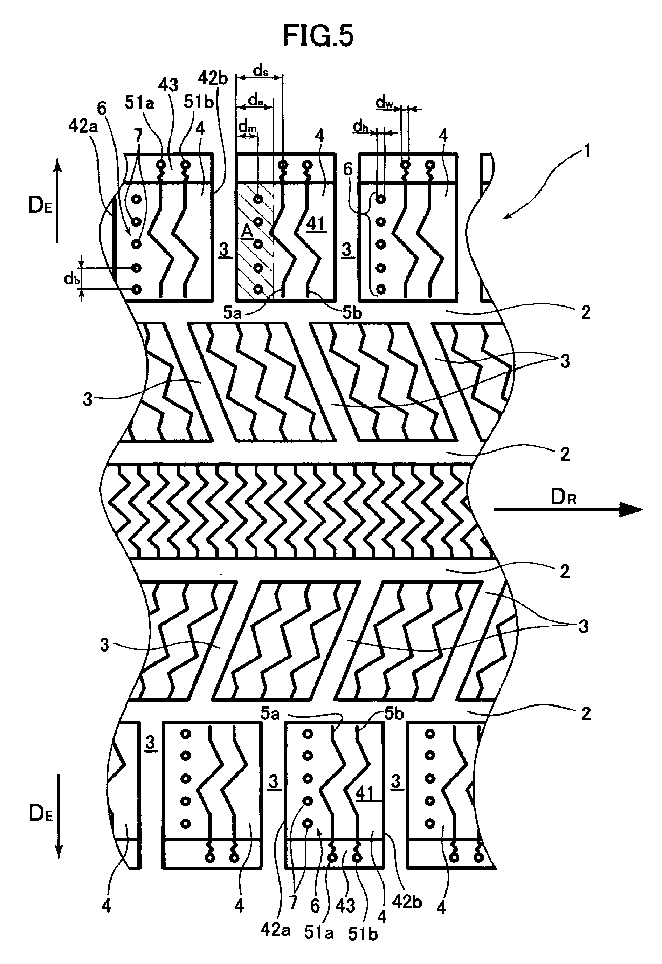

Next, a tread for a winter-use pneumatic tyre according to a third mode of embodiment of the present invention will be described based on Figure 5. Figure 5 is a diagram illustrating schematically a tread for a winter-use pneumatic tyre according to a third mode of embodiment of the present invention. With the tread 1 in the third mode of embodiment, the direction of rotation of the tyre is prescribed as shown by the arrow DR in Figure 5 which indicates the direction of rotation, four circumferential grooves 2 are formed in the tread 1, and the tread 1 is divided into a plurality of regions which are demarcated by the circumferential grooves 2. It should be noted that the size of the tyre in this example is 205/55R16.

In the present mode of embodiment the central section of the tread 1 comprises a continuous rib in which a plurality of thin incisions are formed. Also, transverse grooves 3 are formed in the region between the central section of the tread 1 and the tread shoulder portion, and in the same way a plurality of thin incisions are formed in the blocks formed thereby.

Transverse grooves 3 are also formed in the tread shoulder portion, and the blocks 4 formed thereby have a surface 41 which comes into contact with the road surface when the tyre is rolling. A series of small holes 6, the same as that described hereinabove in the first mode of embodiment, is formed in the blocks 4. In this third mode of embodiment, one series of small holes 6 comprising five small holes 7 which extend in the inward direction of the tyre and which open in the surface 41 which comes into contact with the road surface is formed in the blocks 4 in the tread shoulder portion.

Then, in the third mode of embodiment, as shown in Figure 5 the series of small holes 6 is formed in a neighbouring region A of the trailing side circumferential direction edge 42, which, of the neighbouring regions of the circumferential direction edges 42a, 42b, has the highest concentration of stress when the tyre is rotating. As in the first mode of embodiment, the neighbouring region A of the trailing side circumferential direction edge 42 is a region in which it is possible to suppress the degree of decrease in block rigidity more by forming a series of small holes 6 than by forming an elongated incision, and as shown in Figure 5, it is a region which extends in the direction of rotation of the tyre DR for a distance da from the trailing side circumferential direction edge 42a. The distance da in the third mode of embodiment is 8mm.

Also, thin incisions 5, the same as that described hereinabove in the first mode of embodiment, are formed in the blocks 4. In the third mode of embodiment, two thin incisions 5a, 5b which extend in the inward direction of the tyre and which open in the surface 41 which comes into contact with the road surface are formed in the blocks 4, and widened portions 51a, 51b having a circular cross-sectional shape are formed respectively at the bottoms of the two thin incisions 5a, 5b.

The thin incisions 5a, 5b and the widened portions 51a, 51b open not only in the surface 41 of the block 4, but also in the block wall 43 located on the outer side of the tread as indicated by the arrow DE in Figure 5. By means of such an opening, generation of heat when the tyre is rolling can be more effectively suppressed, and thus tread pattern durability can be enhanced. It should be noted that in the present mode of embodiment the thin incisions 5 at the bottom of which are formed widened portions 51 are formed with a wave-like amplitude in both the width direction and the depth direction, including the widened portions 51, but they may be modified appropriately into another form such as a linear shape, or a form having a width that varies internally, for example.

The blocks 4 in this third mode of embodiment are formed in the tread shoulder portion, which serves a more important function than other regions of the tread in terms of generation of heat in the blocks 4 of the tread 1 when the tyre is rolling, and thus the tread pattern durability can be more effectively enhanced.

Also, in the third mode of embodiment, the series of small holes 6 is formed in an intermediate portion between the circumferential direction edge 42a and the thin incision 5a which has a widened portion 51a at its bottom, from among the thin incisions 5a, 5b, and in the same way as in the first mode of embodiment described hereinabove, the dimensions of the series of small holes 6, and the dimensional relationships between the series of small holes 6, the elongated incision 5a and the circumferential direction edge 42a are the same as in the first mode of embodiment, and the same actions can be obtained thereby as described hereinabove in the first mode of embodiment. The other thin incision 5a having a widened portion 51b contributes to heat dissipation and to enhancing further the performance on ice of the block 4.

Particularly preferred modes of embodiment of the present invention have been described hereinabove, but the present invention may be modified and implemented in the form of various embodiments without limitation to the modes of embodiment illustrated.

Next, the main operational advantages of the first to third modes of embodiment of the present invention will be described based on Figure 1 to Figure 3. The tread 1 for a winter-use pneumatic tyre according to the first to third modes of embodiment has blocks 4 which are aligned in the circumferential direction and in which are formed respectively circumferential direction edges 42 formed by transverse grooves 3, at least one thin incision 5 which extends substantially parallel to the circumferential direction edges 42 and has a depth DI equal to or less than the depth D of a circumferential groove 2, and which has a widened portion 51 at its bottom, and at least one series of small holes 6 comprising at least two small holes 7 which open in a ground contacting surface 41 of the block 4, extend in the inward radial direction of the tyre and have a depth DH equal to or less than the depth D of the circumferential groove 2, and the at least one series of small holes 6 is formed 'in a specific region neighbouring the circumferential direction edge 42' in such a way that the small holes 7 are aligned substantially parallel to the circumferential direction edge 42, in other words 'in a neighbouring region of the circumferential direction edge in which the degree to which the block rigidity is decreased can be suppressed in comparison with a case in which an elongated incision is formed (in the first to third modes of embodiment described hereinabove, a region A a distance da of 8mm from the circumferential direction edge 42 or the trailing side circumferential direction edge 42a)' and therefore decreases in the block rigidity can be suppressed in comparison with a case in which an elongated incision is formed, and as a result the durability of the tread pattern can be enhanced. In other words, if the elongated incision which achieves a first function of maintaining performance on ice is formed in the vicinity of the circumferential direction edge 42, then the degree of decrease in the rigidity of the block 4 is large, and therefore if as in the modes of embodiment described hereinabove a series of small holes 6 achieving a second function of maintaining performance on ice is formed in the neighbouring region A of the circumferential direction edge 42 or the trailing side circumferential direction edge 42a then the decrease in block rigidity can be suppressed.

Further, in the first to third modes of embodiment, in addition to the series of small holes 6 being formed in the neighbouring region A of the circumferential direction edge 42 or the trailing side circumferential direction edge 42a, this series of small holes 6 is formed in such a way that it is disposed in an intermediate portion between the circumferential direction edge 42 and a thin incision 5, and therefore the efficiency with which a water film on the surface of the ice can be sucked up by the series of small holes 6 can be enhanced by means of the widened portion 51 of the elongated incision 5. In other words, the block rigidity decreases locally at the perimeter of the widened portion 51, and therefore by means of such a disposition the series of small holes 6 is more readily influenced by the relative decrease in the block rigidity due to the widened portion 51, and thus the edge effect of each small hole 7 is increased by virtue of an increase in the edge pressure of the small holes 6 which acts on the edge portion, the water film on the surface of the ice can be more effectively sucked up into the interior of the small holes, and therefore the performance on ice is enhanced.

Further, according to the first to third modes of embodiment it is possible to enhance the performance on ice by disposing, as described above in the first to third modes of embodiment, elongated incisions 5 which achieve a first performance on ice, and a series of small holes 6 which is disposed in such a way that the efficiency with which the water film is sucked up is enhanced by the widened portion 51 and which achieves a second performance on ice, while at the same time enhancing tread pattern durability while maintaining a high rigidity of the block as a whole by suppressing the degree of decrease in block rigidity by forming the series of small holes 6 in a neighbouring region A of the circumferential direction edge 42 or the trailing side circumferential direction edge 42a, and by suppressing the concentration of stress at the bottom of the elongated incision 5 by means of the widened portion 51, and by suppressing degradation of the block 4 material by means of heat dissipation in the widened portion 51.

Also, according to the second and third modes of embodiment, the tread for a winter-use pneumatic tyre has a prescribed direction of rotation DR, and in a block 4 of such a tread 1 the tread pattern durability can be more effectively enhanced by forming a series of small holes 6, having a higher resistance to mechanical stress than a case in which a thin incision is formed, in a neighbouring region A of the trailing side circumferential direction edge 42a, which is the circumferential direction edge having the highest concentration of stress when the tyre is rotating.

Also, according to the first to third modes of embodiment, it is possible to achieve enhanced tread pattern durability and to suppress the decrease in the performance on ice because the separation ds between the circumferential direction edge and the at least one thin incision, between which is formed at least one series of small holes, is between 8.0mm and 14.0mm.

Also, according to the first to third modes of embodiment it is possible to achieve enhanced tread pattern durability and to suppress the decrease in the performance on ice because the diameter dh of the small holes constituting the at least one series of small holes is between 1.0mm and 3.0mm.

Also, according to the first to third modes of embodiment it is possible to achieve enhanced tread pattern durability and to suppress the decrease in the performance on ice because the separation db between adjacent small holes constituting the at least one series of small holes is between 3.0mm and 6.0mm.

Also, according to the first to third modes of embodiment the widened portion 51, 51a, 51b of the at least one elongated incision 5, 5a, 5b is formed in such a way that it has a circular cross-sectional shape which typically exhibits a good balance of heat dissipation, resulting from an increase in the surface area which is in contact with the air, and stress dispersion (suppression of stress concentration), and therefore tread pattern durability can be enhanced and it is also possible to alleviate processing complications when the thin incision having a widened portion 51, 51a, 51b at its bottom is manufactured.

Also, according to the first to third modes of embodiment it is possible to achieve enhanced tread pattern durability and to suppress the decrease in the performance on ice because the diameter dw of the circular cross section of the widened portion 51, 51a, 51b of the at least one elongated incision 5, 5a, 5b is between 1.0mm and 3.0mm..

Also, according to the second and third modes of embodiment the tread pattern durability can be effectively enhanced because the blocks 4 aligned in the circumferential direction and having a series of small holes 6, a thin incision 5, 5a, 5b and a circumferential direction edge 42, as described hereinabove, are formed in the tread shoulder portion which serves a more important function than other regions of the tread 1 when the tyre is rolling, and which generates more heat than other portions of the tread.

Also, according to the second and third modes of embodiment a thin incision 5, 5a, 5b, in which a widened portion 51, 51a, 51b is formed, is formed in such a way that it opens in a block wall 43 located on the outside of the tread, and therefore degradation due to heat in the material used for the blocks 4 can be more effectively suppressed, thereby enhancing the tread pattern durability, because heat within the block 4 is dissipated through the open portion which opens in the block wall 43 and a high heat dissipation characteristic can thus be obtained.

### Explanation of the reference numbers

- 1: Winter-use tyre tread
- 2: Circumferential groove
- 3: Transverse groove
- 4: Block
- 41: Surface on block 4 which comes into contact with the road surface when the tyre is rolling
- 42: Circumferential direction edge
- 43: Block wall
- 5, 5a, 5b: Thin incision
- 51, 51a, 51b: Widened portion of thin incision
- 6, 6a, 6b: Series of small holes
- 7, 7a, 7b: Small hole

## Claims

1. Tread (1) for a winter-use pneumatic tyre having at least one circumferential groove (2) extending in the circumferential direction of the tyre, a plurality of transverse grooves (3) extending in the transverse direction of the tyre, and a plurality of blocks (4) demarcated by the circumferential grooves (2) and the transverse grooves (3), this tread
has blocks (4) which are aligned in the circumferential direction and in which are formed respectively circumferential direction edges (42) formed by the abovementioned transverse grooves (3),
and has at least one thin incision (5) extends substantially parallel to the abovementioned circumferential direction edges (42) and has a depth equal to or less than the depth of the abovementioned circumferential groove (2),
and has at least one series of small holes (6) comprising at least two small holes (7) which open in a ground contacting surface (41) of the block (4), said holes extend in the inward radial direction of the tyre and have a depth equal to or less than the depth of the abovementioned circumferential groove (2),
the abovementioned at least one series of small holes (6) being formed in a prescribed neighbouring region of the abovementioned circumferential direction edge (42), and is formed in an intermediate portion between the abovementioned circumferential direction edge (42) and the abovementioned at least one thin incision (5),
such tread being **characterized in that** the abovementioned at least one thin incision (5) has a widened portion (51) at its bottom, this widened portion having a width greater than the width of the incision.

2. Tread (1) for a winter-use pneumatic tyre according to Claim 1, **characterised in that** the abovementioned tread (1) for a winter-use pneumatic tyre has a prescribed direction of rotation and **in that** the specific neighbouring region of the abovementioned circumferential direction edge (42) is a region neighbouring the trailing side circumferential direction edge (42).

3. Tread (1) for a winter-use pneumatic tyre according to Claim 1 or Claim 2, **characterised in that** the separation between the abovementioned circumferential direction edge (42) and the abovementioned at least one thin incision (5), between which at least one series of small holes (6) is formed, is between 8.0mm and 14.0mm.

4. Tread (1) for a winter-use pneumatic tyre according to any one of Claims 1 to 3, **characterised in that** the diameter of the small holes (7) constituting the abovementioned at least one series of small holes (6) is between 1.0 and 3.0mm.

5. Tread (1) for a winter-use pneumatic tyre according to any one of Claims 1 to 4, **characterised in that** the separation between adjacent small holes (7) constituting the abovementioned at least one series of small holes (6) is between 3.0 and 6.0mm.

6. Tread (1) for a winter-use pneumatic tyre according to any one of Claims 1 to 5, **characterised in that** the widened portion (51) of the abovementioned at least one thin incision (5) has a circular cross-sectional shape.

7. Tread (1) for a winter-use pneumatic tyre according to Claim 6, **characterised in that** the diameter of the circular cross section of the abovementioned widened portion (51) is between 1.0 and 3.0mm.

8. Tread (1) for a pneumatic tyre according to any one of Claims 1 to 7, **characterised in that** the abovementioned blocks (4) aligned in the circumferential direction are formed in a tread shoulder portion.

9. Tread (1) for a winter-use pneumatic tyre according to any one of Claims 1 to 8, **characterised in that** the abovementioned at least one thin incision (5) is formed in such a way that it opens in a block wall located on the outside of the tread (1).

## Patentansprüche

1. Lauffläche (1) für einen Winterreifen mit mindestens einer Umfangsrille (2), die in Umfangsrichtung des Reifens verläuft, mehreren Querrillen (3), die in Querrichtung des Reifens verlaufen, und mehreren Blöcken (4), die durch die Umfangsrillen (2) und die Querrillen (3) begrenzt werden, wobei diese Lauffläche Folgendes aufweist:
Blöcke (4), die in Umfangsrichtung ausgerichtet sind und in denen jeweils Umfangsrichtungsränder (42) ausgebildet sind, die durch die oben genannten Querrillen (3) gebildet werden,
und mindestens einen dünnen Einschnitt (5), der im Wesentlichen parallel zu den oben genannten Umfangsrichtungsrändern (42) verläuft und eine Tiefe aufweist, die gleich der Tiefe der oben genannten Umfangsrille (2) oder geringer als diese ist,
und mindestens eine Reihe von kleinen Löchern (6), die mindestens zwei kleine Löcher (7) umfassen, die in einer Bodenkontaktfläche (41) des Blocks (4) münden, wobei die Löcher in der radial nach innen verlaufenden Richtung des Reifens verlaufen und eine Tiefe aufweisen, die gleich der Tiefe der oben genannten Umfangsrille (2) oder geringer als diese ist,
wobei die oben genannte mindestens eine Reihe von kleinen Löchern (6) in einem vorgegebenen benachbarten Bereich des oben genannten Umfangsrichtungsrands (42) ausgebildet ist und in einem Zwischenabschnitt zwischen dem oben gennanten Umfangsrichtungsrand (42) und dem oben genannten mindestens einen dünnen Einschnitt (5) ausgebildet ist,
wobei solch eine Lauffläche **dadurch gekennzeichnet ist, dass** der oben genannte mindestens eine dünne Einschnitt (5) an seinem Grund einen aufgeweiteten Abschnitt (51) aufweist, wobei dieser aufgeweitete Abschnitt eine Breite aufweist, die größer als die Breite des Einschnitts ist.

2. Lauffläche (1) für einen Winterreifen nach Anspruch 1, **dadurch gekennzeichnet, dass** die oben genannte Lauffläche (1) für einen Winterreifen eine vorgegebene Drehrichtung aufweist und dass der bestimmte benachbarte Bereich des oben genannten Umfangsrichtungsrands (42) ein Bereich ist, der dem rückseitigen Umfangsrichtungsrand (42) benachbart ist.

3. Lauffläche (1) für einen Winterreifen nach Anspruch 1 oder Anspruch 2, **dadurch gekennzeichnet, dass** der Abstand zwischen dem oben genannten Umfangsrichtungsrand (42) und dem oben genannten mindestens einen dünnen Einschnitt (5), zwischen denen mindestens eine Reihe von kleinen Löchern (6) ausgebildet ist, zwischen 8,0 mm und 14,0 mm beträgt.

4. Lauffläche (1) für einen Winterreifen nach einem der Ansprüche 1 bis 3, **dadurch gekennzeichnet, dass** der Durchmesser der kleinen Löcher (7), die die oben genannte mindestens eine Reihe von kleinen Löchern (6) bilden, zwischen 1,0 und 3,0 mm beträgt.

5. Lauffläche (1) für einen Winterreifen nach einem der Ansprüche 1 bis 4, **dadurch gekennzeichnet, dass** der Abstand zwischen benachbarten kleinen Löchern (7), die die oben genannte mindestens eine Reihe von kleinen Löchern (6) bilden, zwischen 3,0 und 6,0 mm beträgt.

6. Lauffläche (1) für einen Winterreifen nach einem der Ansprüche 1 bis 5, **dadurch gekennzeichnet, dass** der aufgeweitete Abschnitt (51) des oben genannten mindestens einen dünnen Einschnitts (5) eine kreisförmige Querschnittsform aufweist.

7. Lauffläche (1) für einen Winterreifen nach Anspruch 6, **dadurch gekennzeichnet, dass** der Durchmesser des kreisförmigen Querschnitts des oben genannten aufgeweiteten Abschnitts (51) zwischen 1,0 und 3,0 mm beträgt.

8. Lauffläche (1) für einen Winterreifen nach einem der Ansprüche 1 bis 7, **dadurch gekennzeichnet, dass** die oben genannten in Umfangsrichtung ausgerichteten Blöcke (4) in einem Laufflächenschulterteil ausgebildet sind.

9. Lauffläche (1) für einen Winterreifen nach einem der Ansprüche 1 bis 8, **dadurch gekennzeichnet, dass** der oben genannte mindestens eine dünne Einschnitt (5) so ausgebildet ist, dass er in einer Blockwand auf der Außenseite der Lauffläche (1) mündet.

## Revendications

1. Bande de roulement (1) pour un pneumatique d'hiver ayant au moins une rainure circonférentielle (2) s'étendant dans la direction circonférentielle du pneu, une pluralité de rainures transversales (3) s'étendant dans la direction transversale du pneu, et une pluralité de blocs (4) délimités par les rainures circonférentielles (2) et les rainures transversales (3), ladite bande de roulement présentant des blocs (4) qui sont alignés dans la direction circonférentielle et dans lesquels sont formés des bords (42) respectivement dans la direction circonférentielle, formés par lesdites rainures transversales (3), et
présentant au moins une mince incision (5) s'étendant substantiellement parallèlement auxdits bords (42) dans la direction circonférentielle et présentant une profondeur inférieure ou égale à la profondeur de ladite rainure circonférentielle (2) ,
et présentant au moins une série de petits trous (6) comprenant au moins deux petits trous (7) qui s'ouvrent dans une surface (41) du bloc (4) en contact avec le sol, lesdits trous s'étendant dans la direction interne radiale du pneu et présentant une profondeur inférieure ou égale à la profondeur de ladite rainure circonférentielle (2),
ladite au moins une série de petits trous (6) étant formée dans une région adjacente prescrite dudit bord (42) dans la direction circonférentielle, et étant formée dans une portion intermédiaire entre ledit bord (42) dans la direction circonférentielle et ladite au moins une mince incision (5),
ladite bande de roulement étant **caractérisée en ce que** ladite au moins une mince incision (5) présente une portion élargie (51) à sa base, cette portion élargie ayant une largeur supérieure à la largeur de l'incision.

2. Bande de roulement (1) pour un pneumatique d'hiver selon la revendication 1, **caractérisée en ce que** ladite bande de roulement (1) pour un pneumatique d'hiver présente une direction de rotation prescrite et **en ce que** la région adjacente spécifique dudit bord (42) dans la direction circonférentielle est une région adjacente au bord (42) dans la direction circonférentielle du côté arrière.

3. Bande de roulement (1) pour un pneumatique d'hiver selon la revendication 1 ou la revendication 2, **caractérisée en ce que** la séparation entre ledit bord (42) dans la direction circonférentielle et ladite au moins une mince incision (5), entre lesquels est formée au moins une série de petits trous (6), est comprise entre 8,0 mm et 14,0 mm.

4. Bande de roulement (1) pour un pneumatique d'hiver selon l'une quelconque des revendications 1 à 3, **caractérisée en ce que** le diamètre des petits trous (7) constituant ladite au moins une série de petits trous (6) est compris entre 1,0 et 3,0 mm.

5. Bande de roulement (1) pour un pneumatique d'hiver selon l'une quelconque des revendications 1 à 4, **caractérisée en ce que** la séparation entre des petits trous adjacents (7) constituant ladite au moins une série de petits trous (6) est comprise entre 3,0 et 6,0 mm.

6. Bande de roulement (1) pour un pneumatique d'hiver selon l'une quelconque des revendications 1 à 5, **caractérisée en ce que** la portion élargie (51) de ladite au moins une mince incision (5) présente une forme circulaire en section transversale.

7. Bande de roulement (1) pour un pneumatique d'hiver selon la revendication 6, **caractérisée en ce que** le diamètre de la section transversale circulaire de ladite portion élargie (51) est compris entre 1,0 et 3,0 mm.

8. Bande de roulement (1) pour un pneumatique d'hiver selon l'une quelconque des revendications 1 à 7, **caractérisée en ce que** lesdits blocs (4) alignés dans la direction circonférentielle sont formés dans une portion d'épaulement de la bande de roulement.

9. Bande de roulement (1) pour un pneumatique d'hiver selon l'une quelconque des revendications 1 à 8, **caractérisée en ce que** ladite au moins une mince incision (5) est formée de manière à s'ouvrir dans une paroi de bloc située sur l'extérieur de la bande de roulement (1).
